# EUROPÄISCHE PATENTSCHRIFT

(11) **EP 3 526 424 B1**
(45) Veröffentlichungstag und Bekanntmachung des Hinweises auf die Patenterteilung: **01.12.2021**
(21) Anmeldenummer: 17803768.5
(22) Anmeldetag: 10.10.2017
(51) Int. Cl.: E04G 9/10, B28B 1/00, B29C 33/38, B29C 33/40, E04G 11/04, G06F 17/00, E04G 13/02, E04G 17/02

(54) **MODULARES SCHALUNGSSYSTEM FÜR DIE HERSTELLUNG VON BETONELEMENTEN**
MODULAR FORMWORK SYSTEM FOR PRODUCING CONCRETE ELEMENTS
SYSTÈME DE COFFRAGE MODULAIRE DESTINÉ À LA FABRICATION D'ÉLÉMENTS EN BÉTON

(30) Priorität: 11.10.2016 DE 102016119365
(43) Veröffentlichungstag der Anmeldung: 21.08.2019
(73) Patentinhaber: BigRep GmbH, 10961 Berlin (DE)
(72) Erfinder: PETRI, Jörg, 10557 Berlin (DE)
(74) Vertreter: Paustian & Partner Patentanwälte mbB
(86) Internationale Anmeldenummer: PCT/DE2017/100855
(87) Internationale Veröffentlichungsnummer: WO 2018/068791

(56) Entgegenhaltungen:
- EP-A1- 0 353 637
- EP-A1- 2 836 558
- EP-A2- 0 313 923
- WO-A1-2016/023060
- WO-A2-2012/167948
- US-A1- 2015 336 297

## Beschreibung

Die vorliegende Erfindung betrifft ein modulares Schalungssystem für die Herstellung von Betonelementen und ein Verfahren zur Herstellung eines solchen Schalungssystems.

Nach dem Stand der Technik werden Schalungen zum Herstellen von Betonelementen aus zahlreichen unterschiedlichen Ausführungsformen hergestellt. Zu den Materialien zählen Holz, Eisen, Aluminium und auch Kunststoff.

Bei der Wandverschalung kommen beispielsweise Schalungstafeln aus Aluminium zum Einsatz, welche miteinander verbunden werden, seitlich abgestützt werden und dann mit Beton gefüllt werden.

Nach der Aushärtung des Betons, was temperaturabhängig, werden die Schalungstafeln meist entfernt (außer es handelt sich um verlorene Schalungen) und können wiederverwendet werden.

Aus dem Stand der Technik sind ebenfalls Strukturschalungen bekannt, welchen der Oberfläche der Betonwand eine gewisse Textur aufgeprägt werden kann Wenn diese Strukturschalungen aus einem biegsamen Kunststoff, wie etwa Polyurethan gefertigt sind, ist es möglich sogar leichte Hinterschneidungen der Wand aufzuprägen.

Hinsichtlich der Stärke der Hinterschneidungen ist man mit den aus dem Stand der Technik bekannten Vorrichtungen und Verfahren allerdings beschränkt.

Zudem ist es bei Strukturschalungen meist zu kostenintensiv eine individuelle oder sich abschnittsweise ändernde Textur mit zu erzielen.

Aus dem Dokument EP 2 836 558 AI ist ein abbaubares Material aus biologischen Komponenten sowie Verfahren zur Herstellung eines Formteils aus einem abbaubaren Material bekannt. Das Formteil kann aus dem in flüssiger Form vorliegenden Material gedruckt werden und wird anschließend gehärtet.

Die Aufgabe der vorliegenden Erfindung besteht demnach darin, die aus dem Stand der Technik bekannten Nachteile zu beseitigen und die Gestaltungsfreiheit bei dem Betonguss zu erhöhen.

Diese Aufgabe wird erfindungsgemäß mit einem modularen Schalungssystem nach Anspruch 1 und einem Verfahren zur Herstellung eines modularen Schalungssystems nach Anspruch 11 gelöst.

Die Unteransprüche stellen bevorzugte Ausführungsformen der Erfindung dar.

Dabei ist das erfindungsgemäße Schalungsmodul aus einer Mehrzahl von Einzelformen zusammensetzbar. Zumindest auf der Seite der Einzelform, welche im Anwendungsfall dem Beton zugewandt ist, ist die Oberfläche aus einem schichtweise ausgehärteten Kunststoff hergestellt.

Ein solcher Kunststoff wird vor allem im Rahmen der additiven Fertigung in diesem speziellen Fall bevorzugt mittels Fused Deposition Modeling (FDM) oder besser Fused Filament Fabrication (FFF) hergestellt. Ein derartig gefertigter Gegenstand ist von gegossenen Kunststoffgegenständen in der Regel daran zu erkennen, dass dessen Bruchfestigkeit geringer ist. Dies hat den Vorteil, dass sich die Form später besser lösen lässt.

Zudem können individuell ausgebildete Oberflächen, Hinterschneidungen und komplizierte Strukturen deutlich günstiger mit schichtweise gehärteten Kunststoffen im FFF Verfahren angeboten werden.

Vorzugsweise weist das modulare Schalungssystem wenigstens eine Vorrichtung zur Fixierung auf. Dies können beispielsweise Spanngurte sein, mit welchen die Einzelformen untereinander verbunden werden.

Gemäß einer weiteren Ausführungsform weisen die Einzelformen hierfür Aussparungen und Vorsprünge auf, welche zur Verankerung der Spanngurte dienen. Um die horizontale und vertikale Positionierung der Einzelformen relativ zueinander weiter zu vereinfachen ist gemäß einer weiteren Ausgestaltung vorgesehen, dass die Einzelformen über Nut- Feder-Verbindungen verbindbar sind.

Gemäß einer weiteren Ausgestaltung der Erfindung ist vorgesehen, dass die Einzelformen aus einem wiederverwertbaren Grundträger bzw. Grundplatte und einem von dem Grundträger lösbaren, recycelbaren Kunststoff gefertigt sind. Bei dem recycelbaren Kunststoff handelt es sich bevorzugt um den schichtweise ausgehärteten Kunststoff, der ein zur Wiederverwendung für den 3D-Druck recycelbarer Kunststoff ist. Bei dem vom Grundträger lösbaren Bauteil handelt es sich um das dem Beton zugewandte Bauteil. Dieses sollte eine hohe Auflösung aufweisen um die Detailgenauigkeit der Betonoberfläche zu gewährleisten. Da sich die Druckzeit bei geringerer Schichtdicke reduzieren lässt - sollte das hochaufgelöste Bauteil eine so geringe Schichtdicke wie möglich aufweisen. Die dahinter liegende Grundplatte bzw. Grundträger kann dann bevorzugt in grober Auflösung hergestellt werden und sollte so ausgelegt sein - dass die Hauptlasten des Betondrucks aufgenommen werden können. Bevorzugt ist die gedruckte Form also in zwei Bereiche untergliedert, wobei die dem Beton im Anwendungsfall zugewandte Seite eine höhere Auflösung besitzt, als eine daran anschließende, dem Beton abgewandte Seite der Einzelform. Diese Aufteilung kann bei der Ausführungsform mit oder ohne Grundplatte/ Grundträgers vorgesehen sein.

Vorzugsweise sind in der Grundplatte Vorrichtungen vorgesehen, welche ein Halten des recycelbaren Kunststoffes während des Betongusses ermöglichen. Diese Vorrichtungen können beispielsweise als Aussparungen ausgeführt sein, durch welche ein Vorsprung bzw. eine Auswuchtung des schichtweise gehärteten, recycelbaren Kunststoffes im montierten Zustand nach Außen geführt und verspannt ist. Nach einer anderen Ausgestaltung kann eine Klipsverbindung vorgesehen sein, in welche der schichtweise gehärtete, recycelbare Kunststoff im montierten Zustand eingeklipst ist. Der Grundträger kann aber auch mit dem
formgebenden Bauteil kraftschlüssig verklebt werden.

Die Grundplatte kann dabei ebenfalls aus einem Kunststoff gebildet sein, kann gemäß weiterer Ausführungsformen aber auch aus einem anderen Material, wie beispielsweise Aluminium oder Holz gefertigt sein. Die Grundplatte kann durchaus passgenau, digital gefräst sein um dann das im FFF- Verfahren additiv hergestellte, formgebende Bauteil passgenau aufzunehmen.

Gemäß einer weiteren Ausgestaltung ist vorgesehen, dass die Einzelformen abhängig von der Anordnung des Einzelelementes innerhalb des Schalungssystems im Anwendungsfall unterschiedlich fest ausgebildet sind.

Beispielsweise ist bekannt, dass auf die Einzelformen, welche sich am unteren Ende einer zu gießenden Wand befinden, eine höhere hydrostatische Kraft wirkt als auf die Einzelformen am oberen Ende der Wand. Aus diesem Grund kann es vorgesehen sein, dass die Stärke und Dichte des aus schichtweise gehärtetem Kunststoff des Schalungssystems im unteren Wandbereich größer ist, als im oberen Wandbereich bzw. die Einzelformen abhängig von der Anordnung des Einzelelementes innerhalb des Schalungssystems im Anwendungsfall unterschiedlich fest ausgebildet sind.

Gemäß einer besonderen Ausgestaltung der Erfindung ist vorgesehen, dass die dem Beton zugewandte formgebende Oberfläche der Einzelformen zumindest teilweise d.h. abschnittsweise und/oder in Bezug auf bestimmte Komponente der Oberfläche aus einem wasserlöslichen Kunststoff gefertigt ist. Dies kann ein PVA (Polyvinyl Alkohol) basierter Kunststoff sein oder vergleichbarer Kunststoff mit sehr guten wasserlöslichen Eigenschaften.

Dieser wasserlösliche Kunststoff ermöglicht eine besonders einfache Lösung der Einzelform von den dem hergestellten Betonelement - z.B. der Betonwand.

Gemäß einer weiteren Ausgestaltung ist vorgesehen, dass der wasserlösliche Kunststoff wenigstens einen weiteren Bestandteil enthält. Dies kann z.B. ein Farbpigment sein, welcher durch die teilweise Lösung des wasserlöslichen Kunststoffes im Anwendungsfalle durch den Beton in die Oberfläche des Betons eindringt und dem Beton eine Farbe verleiht. Diese Farbpigmente können einheitlich ausgestaltet sein oder können so innerhalb des Gemisches des wasserlöslichen Kunststoffes angeordnet sein, dass sich bezogen auf das gesamte Schalungssystem ein Muster oder ein Bild ergibt.

Gemäß einer weiteren Ausführungsform kann vorgesehen sein, dass in dem Gemisch des wasserlöslichen Kunststoffes ein Material angeordnet ist, welches sich in der verhärtenden Betonschicht ablegt und die Oberflächenbeschaffenheit des Betons verändert.

Gemäß einer weiteren Ausführungsform ist vorgesehen, dass die Einzelformen zumindest in einzelnen Bereichen aus wabenförmigen Strukturen aufgebaut sind. Diese Strukturen dienen zum einen der Materialeinsparung. Sie können aber in der Größe gebildet sein, dass im Anwendungsfalle Beton in die wabenförmigen Strukturen eindringt wodurch die wabenförmigen Strukturen - abschnittsweise - als Formkerne wirken.

Diese Form kerne können nach unterschiedlichen Verfahren nach dem Betonguss herausgespült werden, insofern es sich um wasserlösliche Kunststoffe handelt, oder sie können in dem Beton verbleiben.

Es kann auch vorgesehen sein, dass die Einzelformen teilweise über wabenförmige Strukturen verfügen, welche teilweise wasserlöslich und teilweise nicht wasserlöslich sind.

So kann im Anwendungsfalle verlorene Schalungen im Inneren des Betons zurückgelassen werden, die mit der verlorenen Schalung verbundenen wasserlöslichen Strukturen ausgespült und in einem weiteren Schritt die neu geschaffenen Hohlräume erneut betoniert werden.

Ein entsprechendes modulares Schalungssystem weist dann beispielsweise einen Formkern auf, der mit wenigstens einer Einzelform über den schichtweise ausgehärteten Kunststoff verbunden ist. Der Formkern kann je nach Auslegung dabei auch Teil des schichtweise ausgehärteten Kunststoffes sein.

Gemäß einer weiteren Ausgestaltung ist vorgesehen, dass die Einzelform im Bereich des wasserlöslichen Kunststoffes wenigstens ein Spülungskanal vorgesehen ist. Hierdurch ist ein späterer Spülvorgang schneller. Weiter bevorzugt ist eine Vielzahl von Spülungskanälen vorgesehen.

Handelt es sich beispielsweise um einen Formkern, welcher wasserlöslich ist, kann gemäß einer weiteren Ausgestaltung vorgesehen sein, dass im Inneren des Formkerns Stützstrukturen angeordnet sind, welche ein Kollabieren des Formkerns durch den hydrostatischen Druck des Betons verhindern. Diese können ebenfalls wasserlöslich ausgebildet sein.

Nach einer bevorzugten Ausführungsform ist vorgesehen, dass wenigsten eine Einzelform über eine Vorrichtung zur wasserführenden Befestigung für eine Spülvorrichtung verfügt. Gemäß einerweiteren Ausführungsform weist jede der Einzelformen über wenigstens eine und bevorzugt mehrere Vorrichtungen zur Befestigung einer Spülvorrichtung, wobei die einzelnen Befestigungsvorrichtungen auch wasserdicht verschlossen werden können. Auf diese Weise ist es möglich im Anwendungsfalle von vielen verschiedenen Seiten aus die wasserlöslichen Strukturen herauszuwaschen.

Wie in der Einführung der Beschreibung schon angegeben umfasst die vorliegende Erfindung auch ein Verfahren zur Herstellung des zuvor beschriebenen Schalungssystems gemäß Anspruch 11.

Dabei umfasst das erfindungsgemäße Verfahren die folgenden Schritte: Zunächst werden die Geometrie und die Größe jeder Einzelform bestimmt, damit nach deren Zusammenfügung die gewünschte Gesamtstruktur des Schalungssystems beim Zusammenfügen der Einzelelemente entsteht.

Das herzustellende Betonelement kann eine Wand, ein Fenster, aber auch eine Mischung zwischen Wand und Fenster und jedes beliebige 3-dimensionale Objekt sein.

Die Geometrie kann mit Hilfe rechnergestützter Konstruktionsprogramme ermittelt werden.

Auf Grundlage dieser Datenwerden dann zumindest die Bereiche der Einzelformen gedruckt, welche dem Beton im Anwendungsfalle zugewandt sind. Gemäß einer anderen Ausgestaltung kann auch die gesamte Einzelform gedruckt sein.

Als Kunststoffe können beispielsweise PLA und PVA verwendet werden.

Vorzugsweise ist der zum Drucken verwendete Kunststoff recycelfähig.

Nach einer weiteren Ausgestaltung wird dieser bevorzugt recycelbare Kunststoff auf einen wiederverwendbaren Grundträger gedruckt oder der gedruckte Kunststoff wird nachträglich mit diesem verbunden.

Gemäß einer besonderen Ausgestaltung weist die Einzelform oder ein mit ihr verbundenes Bauteil, wie der Grundträger einen Speicher auf, auf welchem bevorzugt während des Druckens Informationen über die Einzelform bzw. den auf ihm gedruckten oder mit ihm verbundenen Kunststoff enthalten. Weiter bevorzugt ist dieser Speicher (z.B. ID-Tag) beim Aufbau des gesamten Schalungssystems auslesbar und noch weiter bevorzugt so ausgebildet, dass er für den Monteur Informationen über die Anordnung und Lage der entsprechenden Einzelform liefert. Man könnte in diesem Fall auch von einem digitalen ID-Tag sprechen.

Gemäß verschiedenen Abwandlungen des erfindungsgemäßen Verfahrens ist vorgesehen, dass zum Drucken ein wasserlöslicher Kunststoff verwendet wird. Dies kann z.B. dort vorgesehen sein, wo der Beton im Anwendungsfalle an der Einzelform anliegt. Gemäß anderen Varianten werden später auswaschbare Hohlräume hiermit gedruckt.

Gemäß verschiedenen Varianten können Materialien mit einer oder mit mehreren Löslichkeitsgeschwindigkeiten vorgesehen sein.

Weitere Einzelheiten werden anhand nachfolgender Zeichnungen erklärt, wobei die Figuren Details besonderer Ausführungen wiederspiegeln.

Es zeigen:
- Fig. 1: den digitalen Workflow zur Bestimmung der Einzelformen,
- Fig. 2: den Druck der Einzelformen,
- Fig. 3: die Baustellenmontage und Betonage,
- Fig. 4: die Zerkleinerung und das Recycling,
- Fig. 5: Vorrichtungen zur Fixierung der Einzelelemente,
- Fig. 6: ein pfeilerförmiges Verschalungssystem,
- Fig. 7: unterschiedlich stabile Einzelformen,
- Fig. 8: eine wabenförmige Struktur,
- Fig. 9: einen schichtweise gehärteten Kunststoff,
- Fig. 10: für das Schalungssystem besonders prädestinierte Bauteile,
- Fig. 11: ein Betonelement mit einem wasserlöslichen Formkern,
- Fig. 12: das Betonelement aus Fig. 11 ohne Formkern,
- Fig. 13: eine Übersicht der Verfahrensschritte für eine Ausführung der Erfindung,
- Fig. 14a: eine Einzelform, welche im Querschnitt unterschiedliche Struktur-Dichten aufweist,
- Fig 14b: die Einzelform aus Fig. 14a, welche auf einen Grundträger aufgesetzt ist.

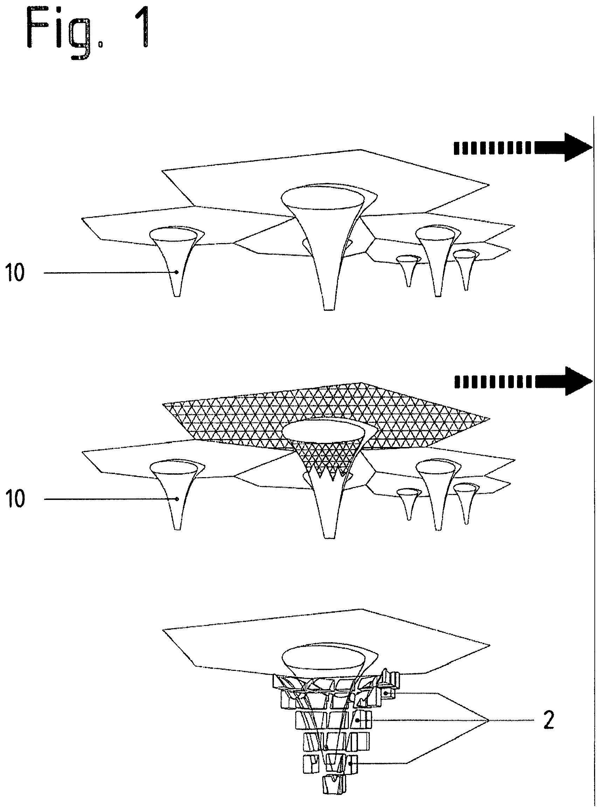

Figur 1 zeigt den digitalen workflow, welcher gemäß einer Ausführungsform der Erfindung durchlaufen wird, um die Einzelformen 2 herzustellen.

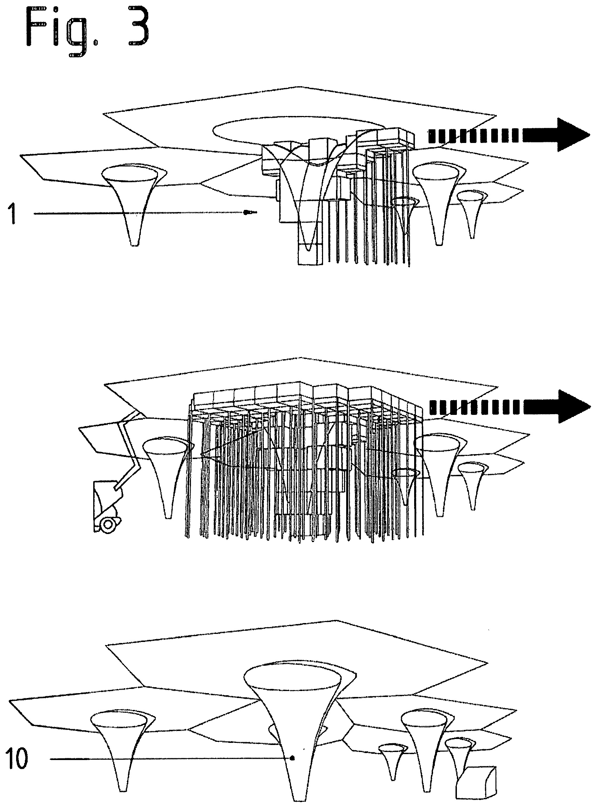

Dabei wird aus dem rechnergestützen Computerprogramm zur Abbildung 3-dimensionaler Objekte ein Modell für die nötigen Wandstärken des Betonobjektes berechnet. Aus diesem wird eine Gesamtform berechnet, welche zuletzt in die Einzelformen 2 unterteilt wird.

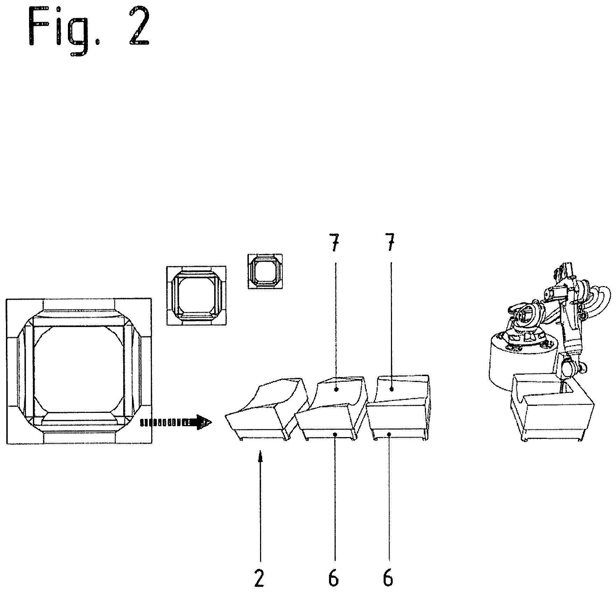

Figur 2 zeigt die Herstellungsweise der Einzelformen 2. Gemäß der hier gezeigten Ausführungsform kommen Grundträger 6 zum Einsatz, welche bevorzugt dazu ausgebildet sind, in einer Fertigungsstraße für 3D-Druck bewegt zu werden. Hierfür weisen die Grundträger 6 bevorzugt Speicher auf, auf denen Informationen von der Fertigungsstraße für 3D-Druck gespeichert werden können. Zudem sind bevorzugt auf dem Grundträger Markierungen für Sensoren der Fertigungsstraße befestigt. Auf den Grundträger werden dann die recycelbaren Kunststoffe aufgedruckt, wie dies zuvor berechnet worden ist. Der Grundträger 6 bildet mit dem aufgedruckten Kunststoff die jeweilige Einzelform 2. In einem weiteren Schritt kann eine Nachbehandlung der Form durch z.B. Auftragen eines Schmierstoffes (Schalfett) oder die Beseitigung von Überhängen vorgesehen sein.

Figur 3 zeigt, wie die Einzelformen 2 auf der Baustelle in Position gebracht werden. Hier nicht dargestellt benutzt der Monteur hierbei die auf der Speichereinheit der Grundträger 6 abgelegten Informationen und eine geeignete Informationen-Wiedergabeeinheit, wie etwa eine graphische/virtuelle Darstellung des zu tätigenden Aufbaus im Raum. Nach der Positionierung und Fixierung der

Einzelformen wird das Schalungssystem 1 mit Beton gefüllt. Nach dem Aushärten werden die Einzelformen 2 entfernt und das Betonobjekt 10 ist fertig gestellt.

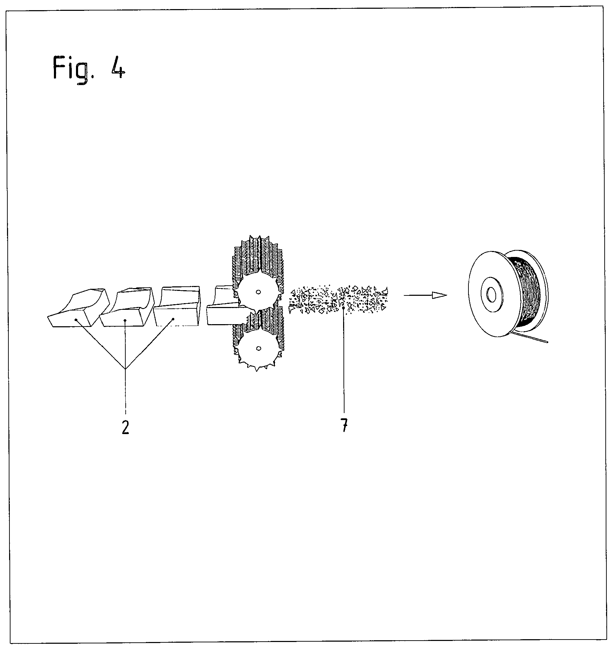

Figur 4 zeigt, dass die auf dem Grundträger 6 aufgebrachten Kunststoffe 7 nach der Betonage vom Grundträger 6 gelöst, zerkleinert, aufgeschmolzen und dann wieder zu einem Filament weiterverarbeitet werden, welches für einen weiteren Druck verwendet werden kann.

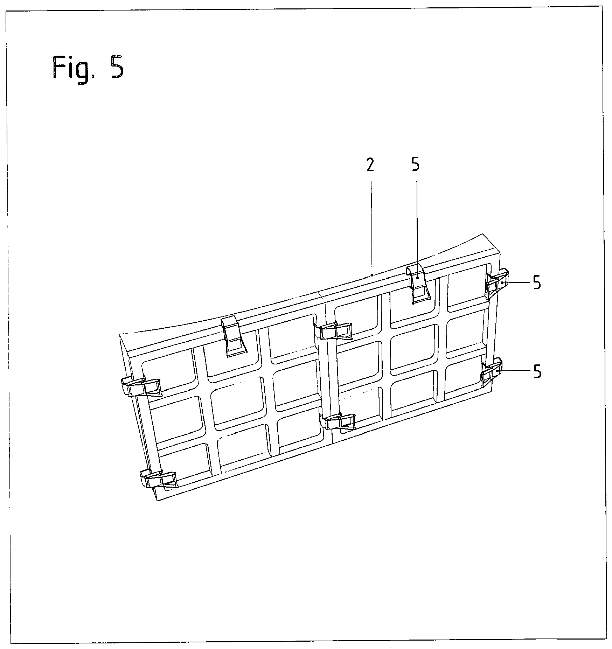

Figur 5 zeigt eine Einzelform 2, welche an ihrem Grundträger
6 über Vorrichtungen zum Fixieren verfügt. Hierdargestellt kommen Spanngurte zum Einsatz. Es können aber auch andere Verbindungsarten gewählt werden.

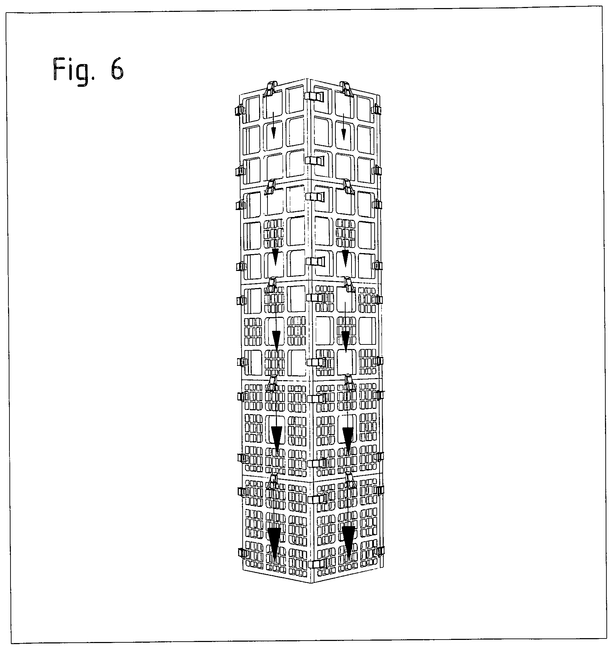

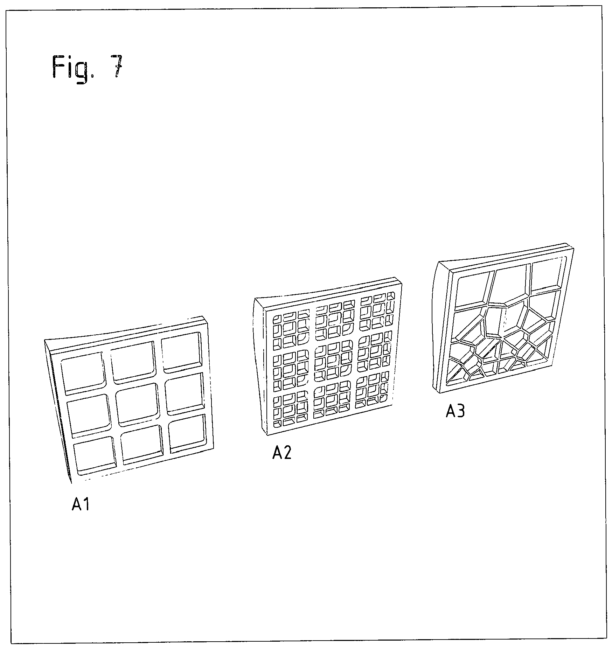

Figur 6 zeigt ein quaderförmiges Schalungssystem 1. Aufgrund seiner Höhe und der zu erwartenden hydrostatischen Kräfte hat man sich in diesem Falle dazu entschlossen, die Einzelformen 2 unterschiedlich fest auszugestalten. Dabei wurden unterschiedliche Rippenstrukturen verwendet, wie in Figur 7 gezeigt ist.

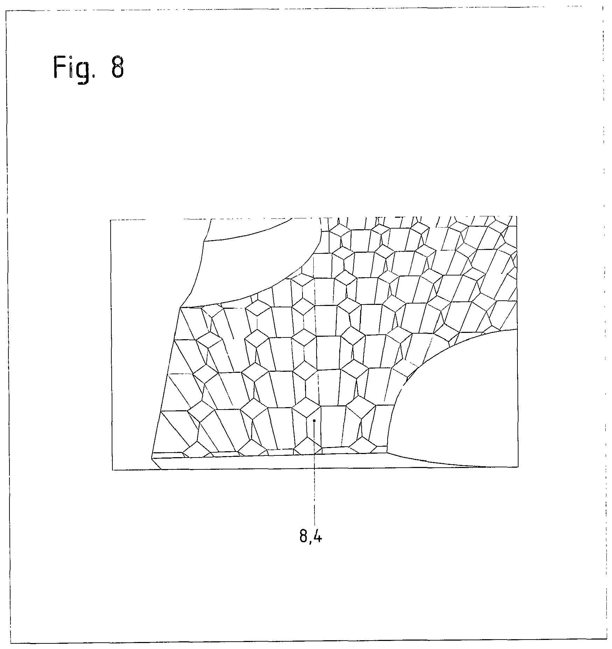

Figur 8 zeigt eine wabenförmige Struktur 8. Im Kontext der Erfindung ist wabenförmig bevorzugt breit auszulegen und bezieht sich bevorzugt nicht nur auf die hier dargestellte Struktur, sondern sämtliche Strukturen mit regelmäßigen Brücken und hierdurch gebildeten Räumen. Gemäß einer weiteren Ausgestaltung zählen auch unregelmäßige Brücken und die dadurch gebildeten Räume zusammen zu derartigen Strukturen.

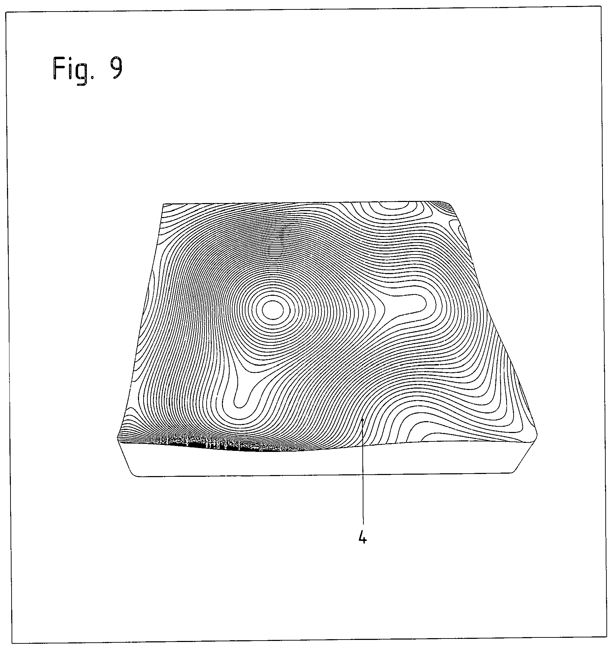

Figur 9 zeigt einen schichtweise ausgehärteten Kunststoff 4. Auch die wabenförmige Struktur aus Figur 8 ist schichtweise aufgebaut. In dieser Figur ist die Maserung jedoch gut zu erkennen und mustert die Betonform.

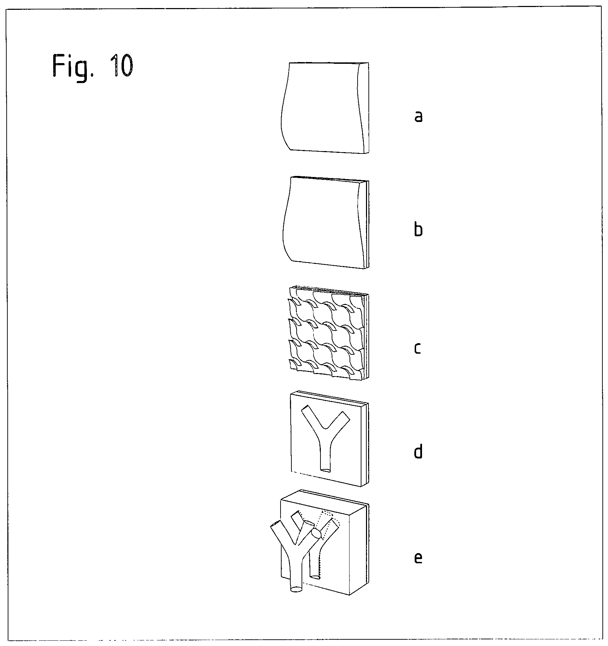

Figur 10 zeigt besonders prädestinierte Objekte für das erfindungsgemäße Schalungssystem 1.
A: Großflächige Betonbauteile (Wände, Stützen, Decken, Fassadenbauteile).
   Das Schalungssystem besteht aus einem Material: PLA (biologisch abbaubar, recycelbar) und kann nach dem Gebrauch zerspant werden um wieder verdruckt zu werden.
B: Großflächige Betonbauteile (Wände, Stützen, Decken). Das Schalungssystem besteht aus zwei Materialien: Grundstruktur aus PLA (biologisch abbaubar, recycelbar), nur die Schaloberfläche besteht aus PVA (biologisch abbaubar, wasserlöslich, recycelbar) und kann nach der Verwendung ausgewaschen werden und für das nächste Bauteil wieder neu aufgedruckt werden.
C: Großflächige Betonbauteile (Wände, Stützen, Decken, Fassadenbauteile) mit integrierten, komplexen Hinterschnitten und Hohlräumen. Das Schalungssystem ist ein Hybrid aus PVA (biologisch abbaubar, recycelbar) und PLA (biologisch abbaubar, wasserlöslich, recycelbar). Nach dem Erhärten des Betons werden die vorgesehenen Hohlräume mit Wasser ausgewaschen.
D, E: Knotenbauteile - das Schalungssystem als Hybrid aus PLA (biologisch abbaubar, recycelbar) und PVA (biologisch abbaubar, wasserlöslich). Neue Knoten können jederzeit erstellt werden, indem die Oberflächenrelevanten.

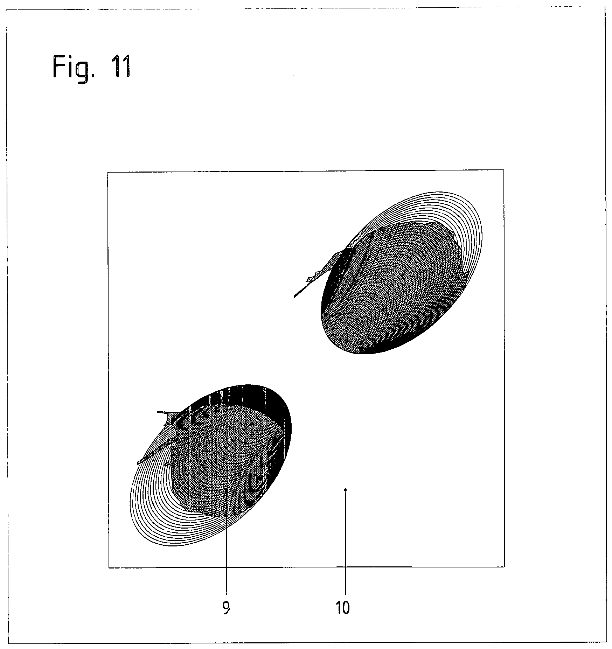

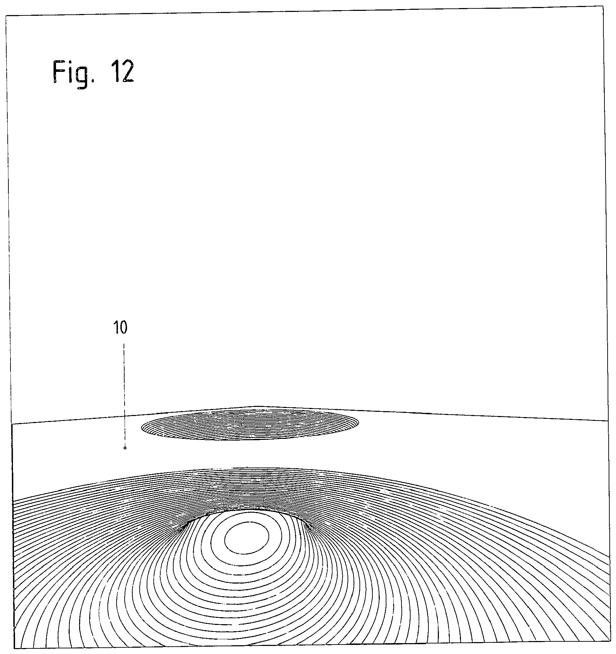

Figuren 11 und 12 zeigen ein Betonelement 10 mit einem wasserlöslichen Kunststoff 9, welcher hier einen Formkern bildet.

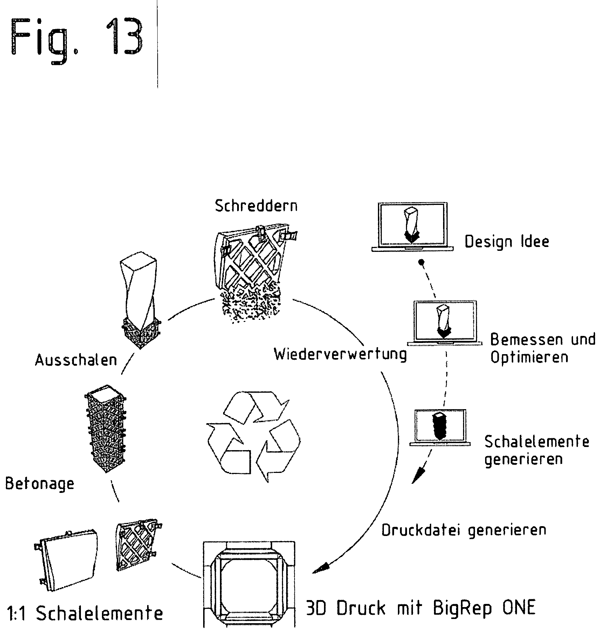

Figur 13 zeigt noch einmal eine besonders bevorzugte Ausführung des erfindungsgemäßen Verfahrens.

Wenn ein Betonbauteil, beispielsweise eine Säule oder ein Pfeiler gegossen werden soll, dann wird zunächst ein Design bevorzugt am PC entworfen. Als nächster Schritt werden die Dimensionen bestimmt. Daraufhin werden die die einzelnen Schalenelemente/ Einzelformen 2 berechnet und an einen 3D Drucker weitergegeben. Dieser druckt die Einzelformen 2 entweder direkt mit Befestigungselementen, zum Beispiel Aussparungen, in welche Vorrichtungen zum Fixieren 5 eingreifen können, oder auf Grundträger 6, welche ihrerseits Befestigungselemente aufweisen. Bevorzugt wird auf einer Einzelform 2 ein Speicher angebracht, in welchem automatisch Informationen über die Einzelform 2 und ggf. ihre Position im Schalungssystem 1 abgelegt werden.

Auf der Baustelle werden dann die Einzelformen unter Berücksichtigung der auf dem Speicher gespeicherten Informationen zu dem Schalungssystem 1 zusammengesetzt.

Im Zusammengesetzten Zustand können die richtige Positionierung der Einzelformen auch über die gespeicherten Informationen noch einmal überprüft werden. Dabei können nach einer Ausführung die einzelnen Speicher der aneinandergrenzenden Einzelformen 2 des Schalungssystems 1 nacheinander ausgelesen werden. Liegen zwei Einzelformen 2 nebeneinander, welche nicht nebeneinander liegen sollten, wird ein Warnsignal ausgegeben.

Nach Feststellen der richtigen Zusammensetzung des Schalungssystems 1 wird es ausgegossen.

Gemäß einer hier nicht dargestellten Variante wird dann an zwei oder mehr Stellen des Schalungssystems 1 eine Spülungsvorrichtung angeschlossen, wobei das Schalungssystem 1 ausgebildet ist, diese abdichtend zu empfangen. Daraufhin werden, soweit vorhanden, lösliche Teile der Einzelformen 2 ausgewaschen.

Hernach wird das Schalungssystem 1 abgebaut. Die Einzelformen werden daraufhin geschreddert, recycelt und das daraus resultierende Material wiederverwendet.

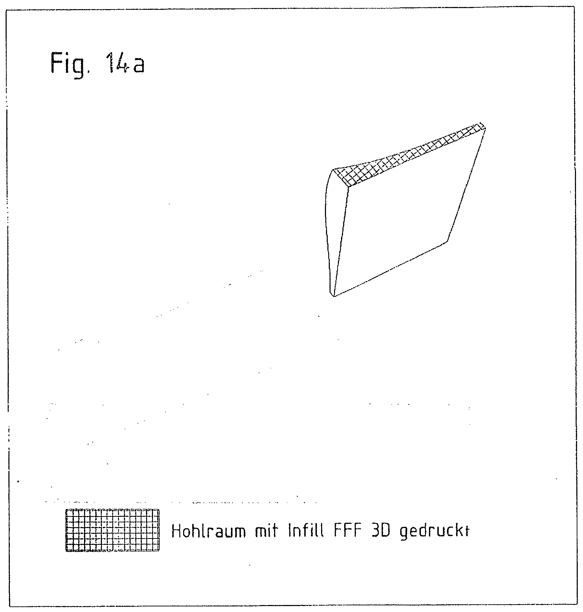

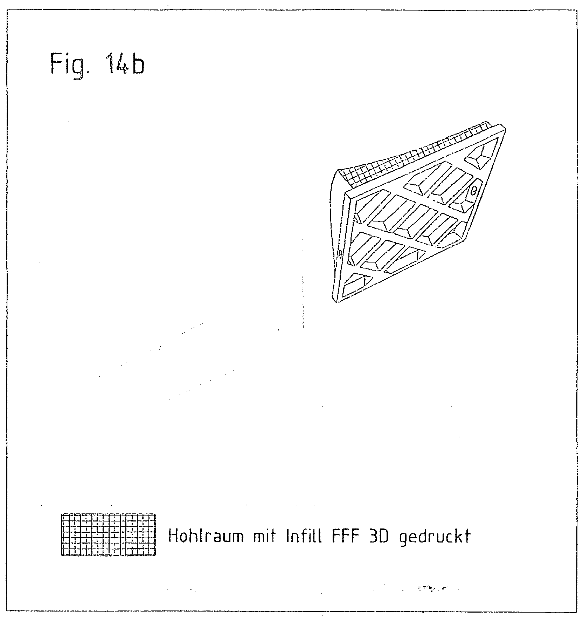

Figuren 14a und 14b zeigen eine weitere erfindungsgemäße Lösung, wie eine schnelle Herstellungsgeschwindigkeit der Einzelformen 2 trotz hoher Auflösung der dem Beton zugewandten Oberfläche erreicht werden kann.

Die Lösung besteht darin ein Druckverfahren im Inneren der Einzelform zu wählen, welches eine geringere Auflösung besitzt, als die Außenflächen der Einzelform 2. Hierfür können beispielsweise wabenförmige Strukturen 8 verwendet werden, welchem mit einem zweiten Druckkopf aufgetragen werden. In diesem Fall besitzt eine an die hochaufgelöste Schicht angrenzende Schicht eine niedrigere Auflösung. In Figur 14b ist gezeigt, wie diese Einzelformen 2 auf die Grundträger 6 aufgesetzt sind. Dies kann zum Beispiel mit einer hier nicht dargestellten Klipsverbindung oder Klebverbindung erfolgen. Der Grundträger 2 ist bevorzugt zur Gewichtsreduzierung ebenfalls nicht massiv ausgeführt, sondern umfasst Stützstrukturen in seinem Inneren.

### Bezugszeichenliste:

- 1: Schalungssystem
- 2: Einzelformen
- 3: Dem Beton zugewandte Oberfläche
- 4: Schichtweise ausgehärteter Kunststoff
- 5: Vorrichtung zur Fixierung
- 6: Grundträger
- 7: Recycelbarer Kunststoff
- 8: Wabenförmige Strukturen
- 9: Wasserlöslicher Kunststoff
- 10: Betonelement

## Patentansprüche

1. Modulares Schalungssystem (1) für die Herstellung von Betonelementen (10), bestehend aus einer Mehrzahl von Einzelformen (2), wobei die Einzelformen (2) zumindest auf der dem Beton zugewandten Oberfläche (3) aus einem schichtweise im additiven Fertigungsverfahren ausgehärtetem Kunststoff (4) mit hochaufgelöster Oberfläche hergestellt sind und zudem über eine an die hochaufgelöste Oberfläche angrenzende gedruckte Schicht mit einer niedrigeren Auflösung verfügen.

2. Modulares Schalungssystem (1) nach Anspruch 1, **dadurch gekennzeichnet, dass** die Schalungssystem (1) über wenigstens eine Vorrichtung zur Fixierung (5) der Einzelformen (2) aufweist.

3. Modulares Schalungssystem (1) nach Anspruch 1 oder 2, **dadurch gekennzeichnet, dass** die Einzelform oder ein mit ihr verbundenes Bauteil einen Speicher aufweist, auf welchem Informationen über die Einzelform abgelegt sind.

4. Modulares Schalungssystem (1) nach einem der vorangehenden Ansprüche, **dadurch gekennzeichnet, dass** die Einzelformen (2) aus einem wiederverwertbaren Grundträger (6) und dem Kunststoff (4) gefertigt sind, wobei der Kunststoff (4) ein lösbarer, zur Wiederverwendung für den 3D-Druck recycelbarer Kunststoff (7) ist.

5. Modulares Schalungssystem (1) nach einem der vorangehenden Ansprüche, **dadurch gekennzeichnet, dass** die die Einzelformen (2) zumindest teilweise aus wabenförmigen Strukturen (8) aufgebaut ist.

6. Modulares Schalungssystem (1) nach einem der vorangehenden Ansprüche, welcher über wenigstens einen Formkern (10) verfügt, der mit wenigstens einer Einzelform (2) über den schichtweise ausgehärteten Kunststoff (4) verbunden ist.

7. Modulares Schalungssystem (1) nach Anspruch 6, **dadurch gekennzeichnet, dass** der Formkern (10) zumindest teilweise aus einem wasserlöslichen Kunststoff (9) verbunden ist.

8. Modulares Schalungssystem (1) nach Anspruch 7, **dadurch gekennzeichnet, dass** im Bereich des wasserlöslichen Kunststoffes (9) wenigstens ein Spülungskanal vorgesehen ist.

9. Modulares Schalungssystem (1) nach Anspruch 8, **dadurch gekennzeichnet, dass** der Spülungskanal über wasserlösliche Stützstrukturen in seinem Inneren verfügt.

10. Modulares Schalungssystem (1) nach einem der Ansprüche 7 oder 8, **dadurch gekennzeichnet, dass** wenigstens eine Einzelform (2) über eine Vorrichtung zur wasserführenden Befestigung einer Spülvorrichtung verfügt.

11. Verfahren zur Herstellung eines modularen Schalungssystems (1) für den Betonbau mit den Schritten:
Bestimmen der Größe und Geometrie mehrerer Einzelformen (2), aus welchen des Schaltungssystems (1) zusammengesetzt ist,
- Drucken wenigstens einer dem Beton zugewandten hochaufgelösten Oberfläche (3) wenigstens einer Einzelform (2) mit Hilfe der additive Fertigungstechnolgie aus schichtweise ausgehärtetem Kunststoff,
- Drucken einer an die hochaufgelöste Oberfläche angrenzenden Schicht mit niedrigerer Auflösung,
- Zusammenfügen und Ausgießen des Schalungssystems.

12. Verfahren zur Herstellung eines Schalungssystems (1) nach Anspruch 11, **dadurch gekennzeichnet, dass** die dem Beton zugewandte Oberfläche (3) aus einem recycelbaren Kunststoff (7) hergestellt wird.

13. Verfahren nach Anspruch 11 oder 12, **dadurch gekennzeichnet, dass** die Einzelformen (2) aus einem wiederverwertbaren Grundträger (6) gebildet werden, auf welchen mit Hilfe der additiven Fertigungstechnologie eine dem Beton zugewandte Oberfläche (3) gedruckt wird, die zur Wiederverwendung des Grundträgers (6) ablösbar ausgebildet ist.

14. Verfahren nach einem der vorangehenden Ansprüche 11-13, **dadurch gekennzeichnet, dass** die dem Beton zugewandte hochaufgelöste Oberfläche (3) zumindest teilweise aus einem wasserlöslichen Kunststoff (9) gedruckt wird.

## Claims

1. Modular formwork system (1) for the production of concrete elements (10), comprising a plurality of individual moulds (2), the individual moulds (2) being produced, at least on the surface (3) facing the concrete, from a plastic (4) which is cured layer by layer in an additive manufacturing process and has a high-resolution surface and, in addition, having a printed layer which is adjacent to the high-resolution surface that has a lower resolution.

2. Modular formwork system (1) according to claim 1, **characterized in that** the formwork system (1) has at least one device for fixing (5) the individual moulds (2).

3. Modular formwork system (1) according to claim 1 or 2, **characterized in that** the individual mould or a component connected thereto has a memory on which information about the individual mould is stored.

4. A modular formwork system (1) according to any one of the preceding claims, **characterized in that** the individual moulds (2) are made of a recyclable base support (6) and the plastic (4), wherein the plastic (4) is a soluble plastic (7) recyclable for reuse in 3D printing.

5. A modular formwork system (1) according to any one of the preceding claims, **characterized in that** the individual moulds (2) are at least partially made from honeycomb structures (8).

6. Modular formwork system (1) according to any one of the preceding claims, which has at least one mould core (10) which is connected to at least one individual mould (2) via the layer-by-layer cured plastic (4).

7. A modular formwork system (1) according to claim 6, **characterized in that** the mould core (10) is at least partially bonded from a water-soluble plastic (9).

8. Modular formwork system (1) according to claim 7, **characterized in that** at least one flushing channel is provided in the region of the water-soluble plastic (9).

9. The modular formwork system (1) of claim 8, **characterized in that** the flushing channel has water-soluble support structures in its interior.

10. Modular formwork system (1) according to any one of claims 7 or 8, **characterized in that** at least one individual mould (2) has a device for attaching, in a water-carrying manner, a flushing device.

11. Method of manufacturing a modular formwork system (1) for concrete construction, comprising the steps:
Determining the size and geometry of a plurality of individual moulds (2) of which the formwork system (1) is composed,
- Printing of at least one high-resolution surface (3), facing the concrete, of at least one individual mould (2) with the aid of additive manufacturing technology from layer-by-layer cured plastic,
- Printing a lower resolution layer adjacent to the high resolution surface,
- Assembly and filling of the formwork system.

12. Method of manufacturing a formwork system (1) according to claim 11, **characterized in that** the surface (3) facing the concrete is made of a recyclable plastic (7).

13. Method according to claim 11 or 12, **characterized in that** the individual moulds (2) are formed from a recyclable base support (6), on which a surface (3) facing the concrete is printed with the aid of additive manufacturing technology, which surface (3) is designed to be detachable for reuse of the base support (6).

14. The method according to any one of claims 11 to 13, **characterized in that** the high resolution surface (3) facing the concrete is printed at least partially from a water-soluble plastic (9).

## Revendications

1. Système de coffrage modulaire (1) pour la fabrication d'éléments en béton (10), comprenant une pluralité de moules individuels (2), les moules individuels (2) étant fabriqués, au moins sur la surface (3) tournée vers le béton, à partir d'une matière plastique (4) durcie couche par couche dans un procédé de fabrication additive et présentant une surface à haute résolution, ainsi que d'une couche imprimée adjacente à la surface à haute résolution qui présentant une résolution inférieure.

2. Système de coffrage modulaire (1) selon la revendication 1, **caractérisé en ce que** le système de coffrage (1) comporte au moins un dispositif de fixation (5) pour les moules individuels (2).

3. Système de coffrage modulaire (1) selon la revendication 1 ou 2, **caractérisé en ce que** le moule individuel ou un composant relié à celui-ci possède une mémoire sur laquelle sont stockées des informations concernant le moule individuel.

4. Système de coffrage modulaire (1) selon l'une quelconque des revendications précédentes, **caractérisé en ce que** les moules individuels (2) sont réalisés à partir d'un support de base recyclable (6) et du plastique (4), le plastique (4) étant un plastique soluble (7) qui peut être recyclé pour être réutilisé pour l'impression 3D.

5. Système de coffrage modulaire (1) selon l'une des revendications précédentes, **caractérisé en ce que** les moules individuels (2) sont au moins partiellement constitués de structures en nid d'abeille (8).

6. Système de coffrage modulaire (1) selon l'une des revendications précédentes, qui présente au moins un noyau de moule (10) qui est relié à au moins un moule individuel (2) par l'intermédiaire de la matière plastique durcie par couches (4).

7. Système de coffrage modulaire (1) selon la revendication 6, **caractérisé en ce que** le noyau de moule (10) est au moins partiellement lié à partir d'un plastique soluble dans l'eau (9).

8. Système de coffrage modulaire (1) selon la revendication 7, **caractérisé en ce qu'**au moins un canal de rinçage est prévu dans l'étendue du plastique hydrosoluble (9).

9. Système de coffrage modulaire (1) selon la revendication 8, **caractérisé en ce que** le canal de rinçage présente des structures de support hydrosolubles à l'intérieur.

10. Système de coffrage modulaire (1) selon l'une des revendications 7 ou 8, **caractérisé en ce qu'**au moins un moule individuel (2) comporte un dispositif pour fixer, d'une manière amenant de l'eau, un dispositif de rinçage.

11. Procédé de fabrication d'un système de coffrage modulaire (1) pour la construction en béton, comprenant les étapes suivantes :
Détermination de la taille et de la géométrie de plusieurs formes individuelles (2) dont se compose le système de coffrage (1),
- Impression d'au moins une surface à haute résolution (3) en regard du béton d'au moins un moule individuel (2) à l'aide de la technologie de fabrication additive à partir de plastique durci couche par couche,
- Impression d'une couche de basse résolution adjacente à la surface de haute résolution,
- Assemblage et coulage du système de coffrage.

12. Procédé de fabrication d'un système de coffrage (1) selon la revendication 11, **caractérisé en ce que** la surface (3) tournée vers le béton est fabriquée à partir d'un plastique recyclable (7).

13. Procédé selon la revendication 11 ou 12, **caractérisé en ce que** les moules individuels (2) sont formés à partir d'un support de base recyclable (6), sur lequel une surface (3) tournée vers le béton est imprimée à l'aide d'une technologie de fabrication additive, laquelle surface (3) est conçue pour être détachable pour la réutilisation du support de base (6).

14. Procédé selon l'une quelconque des revendications 11 à 13, **caractérisé en ce que** la surface haute résolution (3) tournée vers le béton est imprimée au moins partiellement à partir d'un plastique hydrosoluble (9).
